(19) Europäisches Patentamt
European Patent Office
Office européen des brevets

(11) **EP 1 852 684 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(21) Anmeldenummer: **07007787.0**

(22) Anmeldetag: **17.04.2007**

(51) Int Cl.:
*G01D 5/347* *(2006.01)*

(54) **Positionsmesseinrichtung**

Position measuring device

Dispositif de mesure de position

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **05.05.2006 DE 102006021017**

(43) Veröffentlichungstag der Anmeldung:
**07.11.2007 Patentblatt 2007/45**

(73) Patentinhaber: **Dr. Johannes Heidenhain GmbH 83301 Traunreut (DE)**

(72) Erfinder: **Benner, Ulrich 83308 Trostberg (DE)**

(56) Entgegenhaltungen:
**US-A1- 2005 023 450    US-B2- 6 741 335**

## Beschreibung

Die vorliegende Erfindung betrifft eine Positionsmesseinrichtung gemäß dem Oberbegriff des Anspruchs 1 sowie eine Positionsmesseinrichtung gemäß dem Oberbegriff des Anspruchs 13.

Eine derartige Positionsmesseinrichtung ist z.B. aus der US 2005/023450 A1 bekannt. Diese umfasst neben einer Maßverkörperung, z.B. ausgebildet als lineare Reflexions-Maßverkörperung, eine relativ in mindestens einer Messrichtung hierzu verschiebbare Abtasteinheit. Auf Seiten der Abtasteinheit ist eine Lichtquelle sowie eine Detektoranordnung in Form eines periodischen Detektorarrays vorgesehen.

Im Fall der Relativbewegung von Abtasteinheit und Maßverkörperung resultiert in der Detektionsebene ein verschiebungsabhängig moduliertes Streifenmuster, das mittels der Detektoranordnung erfasst und in weiterverarbeitbare Abtastsignale umgewandelt wird. Über die Ausgestaltung der Detektoranordnung in Form eines periodischen Detektorarrays werden hierbei in üblicher Art und Weise mehrere phasenverschobene Abtastsignale erzeugt.

In derartigen Systemen wird in der Regel angestrebt, dass die verwendete Lichtquelle und die eingesetzte Detektoranordnung möglichst in der gleichen Ebene angeordnet sind. Erreichen lässt sich dies beispielsweise, indem die Lichtquelle in einer zentralen Kavität in einem Trägersubstrat angeordnet wird, wobei die Kavität von den Detektorelementen des Detektorarrays umgeben wird. Dies ist jedoch mit signifikantem Fertigungsaufwand verbunden. So muss das Trägersubstrat mit einer geeigneten Kavität ausgebildet werden; die Kontaktierung der Lichtquelle in der Kavität erweist sich zudem als relativ schwierig.

In der US 2004/0155178 A1 ist in den Figuren 13 und 14 in Bezug auf derartige Systeme ferner offenbart, dass es durch die Anordnung von transmittiven optischen Elementen zwischen Lichtquelle und Maßverkörperung möglich ist, die geometrisch-räumliche Lage einer virtuellen Punktlichtquelle definiert einzustellen. Die hierzu vorgeschlagenen transmittiven optischen Elemente verlagern hierbei jedoch die Lage der virtuellen Punktlichtquelle deutlich vor die Detektionsebene. Das heißt, die oben erwähnte Forderung bzgl. der Anordnung der Lichtquelle in der Ebene der Detektoranordnung lässt sich über die vorgeschlagenen Maßnahmen nicht erfüllen. Als unerwünschte Konsequenz resultiert eine abtastabstandsabhängige Veränderung der Periodizität des erzeugten Streifenmusters in der Detektionsebene. Angestrebt wird jedoch eine konstante Streifenmuster-Periode in der Detektionsebene auch für den Fall eines eventuell schwankenden Abtastabstands.

Der vorliegenden Erfindung liegt das Problem zugrunde, eine Positionsmesseinrichtung des oben erwähnten Typs zu schaffen, bei der eine einfache Fertigung der Abtasteinheit gewährleistet ist. Gleichzeitig sollte die zuverlässige Erzeugung von verschiebungsabhängigen Abtastsignalen sichergestellt sein, insbesondere eine Unabhängigkeit von eventuellen Schwankungen des Abtastabstands, d.h. vom Abstand zwischen der Abtasteinheit und der Maßverkörperung.

Diese Aufgabe wird erfindungsgemäß durch eine Positionsmesseinrichtung mit den Merkmalen des Anspruchs 1 gelöst.

Ferner wird diese Aufgabe erfindungsgemäß durch eine Positionsmesseinrichtung mit den Merkmalen des Anspruchs 13 gelöst.

Vorteilhafte Ausführungen der erfindungsgemäßen Positionsmesseinrichtungen ergeben sich aus den Maßnahmen in den jeweiligen abhängigen Ansprüchen.

In einer ersten Variante der erfindungsgemäßen Positionsmesseinrichtung ist nunmehr vorgesehen, in der Abtasteinheit ferner mindestens ein Reflektorelement im Abtaststrahlengang anzuordnen. Dieses besitzt eine optische Wirkung auf den Abtaststrahlengang dahingehend, dass der Abstand zwischen einer virtuellen Lichtquelle und der Reflexions-Maßverkörperung einerseits und der Reflexions-Maßverkörperung und der Detektionsebene andererseits identisch ist, wodurch die Lichtquelle virtuell in der Detektionsebene platziert wird.

Es kann damit die zentrale Forderung nach identischen Abständen zwischen der (nunmehr virtuellen) Lichtquelle und der Reflexions-Maßverkörperung einerseits und der Reflexions-Maßverkörperung und der Detektoranordnung bzw. der Detektionsebene andererseits für das vorliegende Abtastprinzip eingehalten werden. Vorzugsweise lässt sich in dieser Variante durch die entsprechende Anordnung des Reflektorelements zwischen der realen Lichtquelle und der Reflexions-Maßverkörperung der Abstand zwischen der Lichtquelle und der Reflexions-Maßverkörperung definiert einstellen. Dergestalt ist insbesondere eine gleichbleibende Streifenmusterperiodizität in der Detektionsebene auch bei eventuell schwankenden Abtastabständen sichergestellt. Zudem lassen sich die oben erwähnten fertigungstechnischen Probleme beim ansonsten erforderlichen Anordnen der Lichtquelle in einer entsprechenden Kavität damit umgehen. Es existieren somit vielfältigere Möglichkeiten zur Platzierung der Lichtquelle in der Abtasteinheit.

Basierend auf der ersten Variante der erfindungsgemäßen Positionsmesseinrichtung resultieren vielfältigste Ausführungsvarianten.

Vorzugsweise wird hierbei das Reflektorelement zwischen der Lichtquelle und der Reflexions-Maßverkörperung angeordnet.

Es ist grundsätzlich möglich, das Reflektorelement als refraktives optisches Element oder aber als diffraktives optisches Element auszubilden.

In einer vorteilhaften Ausführungsform umfasst die Abtasteinheit ein transparentes Trägersubstrat, auf dessen zur Reflexions-Maßverkörperung zugewandten ersten Seite (Oberseite) die Lichtquelle angeordnet ist und auf dessen von der Reflexions-Maßverkörperung abgewandten zweiten Seite (Unterseite) das Reflektorelement angeordnet ist.

Vorzugsweise ist hierbei die strahlungsemittierende Fläche der Lichtquelle in Richtung der ersten Seite des Trägersubstrats angeordnet und die Lichtquelle emittiert Strahlung in Richtung der zweiten Seite des Trägersubstrats.

Mit Vorteil ist das Reflektorelement als in die zweite Seite des Trägersubstrats integriertes optisches Bauelement ausgebildet.

Vorzugsweise ist das Trägersubstrat mit der Lichtquelle und dem Reflektorelement über einer Detektoreinheit mit mindestens einer Detektoranordnung angeordnet, wobei die Detektoreinheit auf einer Trägerplatine in der Abtasteinheit platziert ist.

Hierbei kann das Trägersubstrat eine kleinere Fläche als die Detektoreinheit einnehmen und in einem zentralen Teilbereich der Detektoreinheit angeordnet sein, ohne dass die Detektoranordnungen vollständig überdeckt sind, so dass die Detektoreinheit in nicht vom Trägersubstrat abgedeckten Bereichen über Bonddrähte mit Leiterbahnen in der Trägerplatine elektrisch leitend verbunden ist.

Ferner kann die Lichtquelle auf dem Trägersubstrat über Bonddrähte mit Leiterbahnen in der Detektoreinheit elektrisch leitend verbunden sein.

Ferner ist es möglich, dass das Trägersubstrat die mindestens eine Detektoranordnung auf der Detektoreinheit teilweise überdeckt, wobei zur elektrischen Kontaktierung der Detektoranordnung Kontaktierungs-Leiterbahnen zwischen der zweiten Seite des Trägersubstrats und der Detektoranordnung angeordnet sind.

Hierbei kann die Lichtquelle auf dem Trägersubstrat über Kontaktierungs-leiterbahnen auf dem Trägersubstrat mit Leiterbahnen in der Detektoreinheit elektrisch leitend verbunden sein.

In einer zweiten Variante der Positionsmesseinrichtung ist erfindungsgemäß vorgesehen, mindestens ein optisches Transmissions-Element im Abtaststrahlengang anzuordnen, welches eine optische Wirkung auf den Abtaststrahlengang dahingehend besitzt, dass der Abstand zwischen der Lichtquelle und der Reflexions-Maßverkörperung einerseits und der Reflexions-Maßverkörperung und einer Detektoranordnung in einer virtuellen Detektionsebene andererseits identisch ist, so dass im Fall der Relativbewegung von Abtasteinheit und Reflexions-Maßverkörperung ein verschiebungsabhängig moduliertes Streifenmuster in der virtuellen Detektionsebene resultiert.

Über die erfindungsgemäßen Maßnahmen dieser Variante kann somit sichergestellt werden, dass auf jeden Fall das abgetastete Streifenmuster in der virtuellen Detektionsebene zu liegen kommt. Dies kann je nach vorhandener Abtastkonfiguration ergänzend zu den Maßnahmen der ersten Variante erforderlich sein oder aber als alleinige Maßnahme hinreichend sein, um die gewünschte Unabhängigkeit der Abtastung vom Abtastabstand zu gewährleisten.

Basierend auf der zweiten Variante der erfindungsgemäßen Positionsmesseinrichtung, gibt es ebenfalls alternative Ausführungsvarianten.

So ist etwa in einer vorteilhaften Ausführungsform das optische Transmissionselement zwischen der Reflexions-Maßverkörperung und der Detektoranordnung im Abtaststrahlengang angeordnet.

Vorzugsweise ist das optische Transmissionselement als refraktives optisches Element ausgebildet, beispielsweise als planparallele Glasplatte mit einer definierten Dicke.

Die Abtasteinheit kann eine Trägerplatine umfassen, auf der eine Detektoreinheit mit mindestens einer Detektoranordnung angeordnet ist, wobei über der Detektoranordnung das optische Transmissionselement angeordnet ist.

Ferner kann das optische Transmissionselement mit optischen Elementen versehen werden, die sicherstellen, dass Licht nur senkrecht auf die Detektoranordnung einfällt.

Sowohl in Verbindung mit der ersten und der zweiten Variante der erfindungsgemäßen Positionsmesseinrichtung existieren weitere Möglichkeiten zur Ausgestaltung derselben.

So kann etwa die Lichtquelle vorzugsweise als Punktlichtquelle ausgebildet werden.

Die Abtasteinheit umfasst in einer vorteilhaften Ausführungsform mindestens zwei Detektoranordnungen, von denen eine erste Detektoranordnung zur Detektion eines verschiebungsabhängigen Inkrementalsignals geeignet ist und eine zweite Detektoranordnung zur Detektion eines Absolutpositionssignals geeignet ist.

Die Detektoranordnung kann ferner als Detektorarray ausgebildet werden, das aus einzelnen Detektorelementen besteht, die in Messrichtung benachbart zueinander angeordnet sind.

Weitere Einzelheiten und Vorteile der vorliegenden Erfindung seien anhand der nachfolgenden Beschreibung von Ausführungsbeispielen erfindungsgemäßer Positionsmesseinrichtungen in Verbindung mit den Figuren erläutert.

Es zeigen:

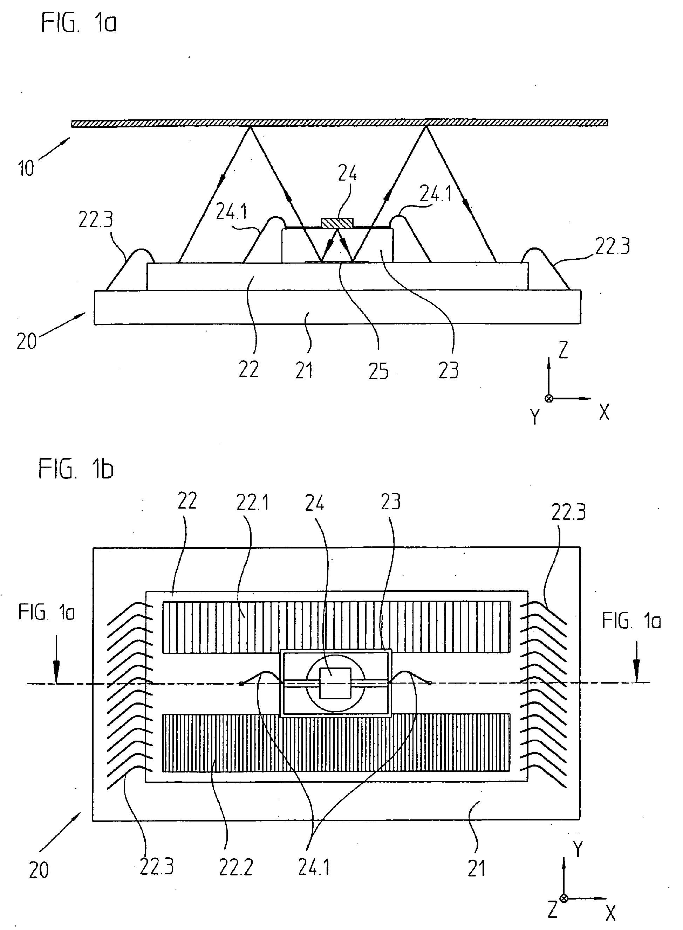

Figur 1 a      eine schematisierte seitliche Absicht einer ersten Variante der erfindungsgemäßen Positionsmesseinrichtung;

Figur 1 b      eine Draufsicht auf die Abtasteinheit der Positionsmesseinrichtung aus Figur 1a;

Figur 2        eine schematisierte Darstellung des Abtaststrahlengangs zur Erläuterung bestimmter geometrischer Größen in der erfindungsgemäßen Positionsmesseinrichtung;

Figur 3a - 3d   alternative Ausführungsvarianten des optischen Reflektorelements in der Abtasteinheit einer erfindungsgemäßen Positionsmesseinrichtung;

Figur 4a        eine schematisierte seitliche Absicht einer weiteren Ausführungsform der ersten Variante der erfindungsgemäßen Positionsmesseinrichtung;

Figur 4b        eine Draufsicht auf die Abtasteinheit der Positionsmesseinrichtung aus Figur 4a;

Figur 5a        eine schematisierte seitliche Absicht einer zweiten Variante der erfindungsgemäßen Positionsmesseinrichtung;

Figur 5b        eine Draufsicht auf die Abtasteinheit der Positionsmesseinrichtung aus Figur 5a;

Figur 6a und 6b jeweils schematisierte Darstellungen des Abtaststrahlengangs zur Erläuterung bestimmter geometrischer Größen der zweiten Variante einer erfindungsgemäßen Positionsmesseinrichtung.

Anhand der Figuren 1 a und 1b sei nachfolgend eine erste Variante der erfindungsgemäßen Positionsmesseinrichtung erläutert. Figur 1 a zeigt hierbei eine schematisierte seitliche Ansicht von Teilen der Abtasteinheit 20 und der Reflexions-Maßverkörperung 10 inclusive Abtaststrahlengang; Figur 1b zeigt eine Draufsicht auf die Abtasteinheit 20 aus Figur 1 a.

Im dargestellten Beispiel umfasst die erfindungsgemäße Positionsmesseinrichtung eine Abtasteinheit 20, die gegenüber einer Reflexions-Maßverkörperung 10 in Messrichtung x beweglich angeordnet ist. Reflexions-Maßverkörperung 10 und Abtasteinheit 20 sind z.B. mit zwei zueinander in Messrichtung x verschiebbar angeordneten Objekten verbunden, etwa zwei zueinander beweglichen Maschinenteilen. Über die positionsabhängigen Ausgangssignale der erfindungsgemäßen Positionsmesseinrichtung kann eine - nicht gezeigte - nachgeordnete Steuereinheit die Bewegung dieser Maschinenteile in bekannter Art und Weise geeignet steuern.

Die Reflexions-Maßverkörperung 10 weist im dargestellten Beispiel eine Spur mit einer linearen Inkrementalteilung sowie eine parallel dazu angeordnete Spur mit einer Pseudo-Random-Codierung zur Absolutpositionsdetektion auf. Beide Spuren sind auf einem geeigneten Teilungsträger angeordnet, beispielsweise einem Stahlsubstrat.

Die Spur mit der Inkrementalteilung besteht aus periodisch in Messrichtung x angeordneten Teilbereichen mit unterschiedlichen optischen Reflexionseigenschaften. Die Teilbereiche erstrecken sich in der Teilungsebene senkrecht zur Messrichtung x, d.h. in der angegebenen y-Richtung. Hierbei besitzen die Teilbereiche der dargestellten Ausführungsform unterschiedliche phasenschiebende Wirkungen auf die hiervon reflektierten Strahlenbündel. Die Reflexions-Maßverkörperung 10 ist in diesem Beispiel als sog. Reflexions-Phasengitter ausgebildet.

Die Spur mit der Pseudo-Random-Codierung besteht aus aperiodisch in Messrichtung angeordneten Teilbereichen mit unterschiedlichen optischen Reflexionseigenschaften.

Von der Abtasteinheit 20 ist in der stark schematisierten Darstellung der Figuren 1 a und 1b nur ein Teil erkennbar; üblicherweise umfasst die Abtasteinheit 20 zudem ein geeignetes Gehäuse, in dem die verschiedenen Komponenten derselben angeordnet werden. Dargestellt sind in den Figuren aus Gründen der Übersichtlichkeit nur die für die Erläuterung der vorliegenden Erfindung nötigen Elemente.

Auf Seiten der Abtasteinheit 20 ist auf einer Trägerplatine 21 eine Detektoreinheit 22 mit zwei Detektoranordnungen 22.1, 22.2 vorgesehen. Eine erste Detektoranordnung 22.1 dient zur Abtastung eines periodischen Streifenmusters in der Detektionsebene und zur Erzeugung mehrerer phasenverschobener Inkrementalsignale. Das abgetastete Streifenmuster resultiert aus der optischen Abtastung der Inkrementalteilung auf der Reflexions-Maßverkörperung 10. Die erste Detektoranordnung 22.1 besteht hierbei aus einem bekannten Detektorarray mit einer in Messrichtung x periodischen Anordnung von einzelnen Detektorelementen bzw. Photodioden.

Eine zweite Detektoranordnung 22.2 fungiert in bekannter Art und Weise zur Abtastung der in die Detektionsebene projizierten Pseudo-Random-Codierung der zweiten Spur. Über die zweite Detektoranordnung 22.2 ist die Erzeugung mindestens eines Absolutpositionssignals möglich. Die derart erzeugten Inkrementalsignale und Absolutpositionssignale seien nachfolgend der Einfachheit halber nur als Positionssignale bezeichnet.

Die beiden Detektoranordnungen 22.1, 22.2 werden in der vorliegenden ersten Variante der erfindungsgemäßen Positionsmesseinrichtung über Bonddrähte 22.3 elektrisch kontaktiert, d.h. elektrisch leitend mit - nicht dargestellten - Leiterbahnen in der Trägerplatine 21 verbunden. Über die Leiterbahnen in der der Trägerplatine 21 werden die erzeugten Positionssignale einer - nicht gezeigten - nachgeordneten Steuereinheit zur Weiterverarbeitung zugeführt.

Oberhalb der Detektoreinheit 22 mit den beiden Detektoranordnungen 22.1, 22.2 ist auf Seiten der Abtasteinheit 20 in einem zentralen Teilbereich der Detektoranordnungen ein transparentes Trägersubstrat 23 angeordnet, beispielsweise ausgebildet als plattenförmiges Glas-Trägersubstrat. Dieses nimmt im vorliegenden Beispiel nur einen kleineren Teil der Gesamtfläche der Detektoranordnung(en) bzw. der Oberfläche der Detektoreinheit 22 ein, wie etwa aus Figur 1b ersichtlich ist. Auf der Oberseite des Trägersubstrats 23, nachfolgend als erste Seite des Trägersubstrats 23 bezeichnet, ist eine Lichtquelle 24 platziert. Als Lichtquelle fungiert beim gewählten Abtastprinzip vorzugsweise eine sog. Punktlichtquelle, wie z.B. eine sog. VCSEL-Lichtquelle. Die Lichtquelle 24 wird über weitere Bonddrähte 24.1 elektrisch kontaktiert, die auf der Oberseite des Trägersubstrats 23 mit entsprechenden Kontakten verbunden sind. Über die Bonddrähte 24.1 werden diese Kontakte mit - nicht gezeigten - Leiterbahnen in der Detektoreinheit 22 verbunden.

Die strahlungsemittierende Fläche der Lichtquelle 24 ist in Richtung der ersten Seite des Trägersubstrats 23 orientiert. Die Lichtquelle 24 strahlt demzufolge weg von der Reflexions-Maßverkörperung 10 in Richtung der Unterseite des Trägersubstrats 23, die nachfolgend als zweite Seite derselbigen bezeichnet sei.

Auf der Unterseite bzw. der zweiten Seite des Trägersubstrats 23 ist ein optisches Reflektorelement 25 angeordnet, das im vorliegenden Beispiel als in das Trägersubstrat 23 integrierte Gitterstruktur ausgebildet ist, d.h. als diffraktives optisches Element. Dessen maßgebliche optische Funktionalität wird nachfolgend noch im Detail erläutert.

Die von der Lichtquelle 24 kommenden Strahlenbündel werden - wie in Figur 1 a angedeutet, vom Reflektorelement 25 in Richtung der Reflexions-Maßverkörperung 10 umgelenkt bzw. zurückreflektiert und durchlaufen anschließend das Trägersubstrat 23 nochmals in umgekehrter Richtung. Dann gelangen die Teilstrahlenbündel auf die Reflexions-Maßverkörperung 10 und werden dort wiederum in Richtung der Abtasteinheit 20 zurückreflektiert. Auf Seiten der Abtasteinheit 20 gelangen die von der Reflexions-Maßverkörperung 10 kommenden Teilstrahlenbündel schließlich auf die in der Detektionsebene platzierten Detektoranordnungen 22.1, 22.2 und erzeugen dort im Fall der Relativbewegung von Abtasteinheit 20 und Reflexions-Maßverkörperung 10 verschiebungsabhängige Positionssignale. Im Fall der Inkrementalsignale wird über den erläuterten Abtaststrahlengang und die dabei resultierenden Wechselwirkungen der Teilstrahlenbündel mit der Reflexions-Maßverkörperung 10 ein periodisches Streifenmuster in der Detektionsebene erzeugt. Dieses wird im Fall der Relativbewegung von Abtasteinheit 20 und Reflexions-Maßverkörperung 10 verschiebungsabhängig moduliert und über die Detektoranordnung 22.1 in bekannter Art und Weise in mehrere phasenverschobene Inkrementalsignale zur Weiterverarbeitung umgewandelt.

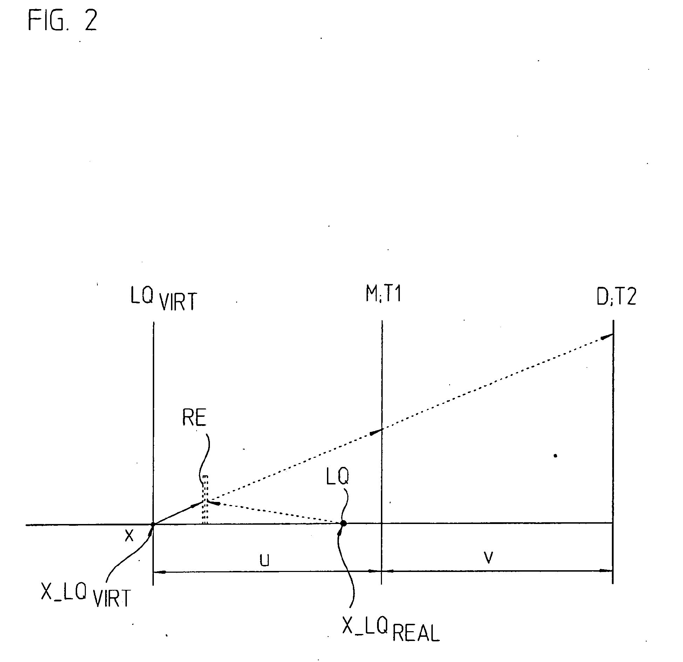

Wie bereits eingangs angedeutet, ist es für das vorliegende Abtastprinzip zur Erzeugung der Inkrementalsignale maßgeblich, dass die verwendete Lichtquelle 24 möglichst in der Detektionsebene angeordnet wird. Nur in diesem Fall kann die Unempfindlichkeit des erzeugten periodischen Streifenmusters in der Detektionsebene vom jeweiligen Abtastabstand gewährleistet werden. Zu diesen Zusammenhängen sei auf die noch folgende Erläuterung zur Figur 2 verwiesen. Gemäß dem Stand der Technik wird entweder eine derartige Schwankung der Streifenmusterperiode in der Detektionsebene in Kauf genommen oder aber eine zentrale Anordnung der Lichtquelle in einer Kavität vorgesehen, die von der Detektoranordnung umgeben wird. Im Rahmen der ersten Variante der vorliegenden Erfindung wird nunmehr durch eine geschickte Auslegung des Abtaststrahlengangs und insbesondere durch das Vorsehen des erwähnten Reflektorelements 25 eine alternative vorteilhafte Lösungsmöglichkeit dieser Problematik angegeben. So kann durch die Integration des Reflektorelements 25 in den Abtaststrahlengang erreicht werden, dass die Lichtquelle 24 virtuell in der Detektionsebene platziert wird, während diese tatsächlich bzw. real an einer anderen Stelle der Abtasteinheit 20 angeordnet wird, nämlich wie etwa in den Figuren 1 a und 1b ersichtlich auf der ersten Seite bzw. der Oberseite des Trägersubstrats 23.

Das erfindungsgemäße Vorgehen sei anhand der Darstellung in Figur 2 noch detaillierter erläutert. Diese zeigt in schematisierter Form den entfalteten Abtaststrahlengang inclusive einiger relevanter geometrischer Größen in der ersten Variante der erfindungsgemäßen Positionsmesseinrichtung.

Mit M wird in Figur 2 hierbei die Ebene mit der Reflexions-Maßverkörperung bezeichnet, mit D die Detektionsebene, $LQ_{VIRT}$ gibt die Lage der virtuellen Lichtquellenebene an, mit RE wird das Reflektorelement bezeichnet, LQ bezeichnet die reale Lichtquelle. Die Größe T1 gibt die Teilungsperiode der abgetasteten Maßverkörperung an, T2 die Teilungsperiode des in der Detektionsebene D resultierenden periodischen Streifenmusters. Über die Koordinate $x\_LQ_{VIRT}$ wird die Lage der virtuellen Lichtquelle im Abtaststrahlengang entlang der Messrichtung x angegeben, mit der Koordinate $x\_LQ_{REAL}$ die Lage der realen Lichtquelle, wie in den Figuren 1 a und 1b erläutert. Die Größe u repräsentiert wie veranschaulicht den Abstand zwischen der virtuellen Lichtquellenebene $LQ_{VIRT}$ und der Maßverkörperungsebene M, die Größe v bezeichnet den Abstand zwischen der Maßverkörperungsebene M und der Detektionsebene D.

Im Fall von Auflicht-Abtastungskonfigurationen wie im vorliegenden Fall ergibt sich die Periodizität T2 des erzeugten Streifenmusters in der Detektionsebene D aufgrund geläufiger geometrischer Überlegungen gemäß folgender Gleichung (1):

$$T2 = T1 * (u+v) / v \qquad (Gl. 1)$$

Im Fall von eventuell in der Praxis resultierenden Schwankungen von u und v, d.h. also bei Schwankungen des Abtastabstands Δuv im Auflicht-System, ergibt sich eine resultierende Schwankung ΔT2 in der Periodizität des erzeugten Streifenmusters gemäß der nachfolgenden Gleichung (2):

$$\Delta T2 = T1 * \Delta uv \, (1-u/v) \, / \, v \qquad (Gl. \ 2),$$

wobei Δuv:= Variation des Abtastabstands

Wenn nunmehr die Bedingung u = v eingehalten wird, so verschwindet der Term (1-u/v) in Gl. (2), d.h. die Periodizität T2 des Streifenmusters in der Detektionsebene D bleibt auch bei eventuellen Schwankungen des Abtastabstands Δuv unverändert, da ΔT2 = 0 resultiert. Eine Einhaltung der Bedingung u = v ist im Fall eines Auflicht-Systems gleichbedeutend mit der Platzierung der Lichtquelle in der Detektionsebene D.

Wie nunmehr aus der Darstellung der Figur 2 hervorgeht, kann gemäß der ersten Variante der erfindungsgemäßen Positionsmesseinrichtung eine Einhaltung der Bedingung u = v aber auch dadurch realisiert werden, dass die Lichtquelle LQ virtuell in der Ebene LQ$_{VIRT}$ angeordnet wird, sich real aber in der Position x_LQ$_{REAL}$ platziert befindet. Ermöglicht wird dies wie aus Figur 2 ersichtlich durch den Einsatz eines Reflektorelements RE an der angegebenen Position; dadurch lässt sich in definierter Art und Weise die Größe u in den oben erwähnten Bedingungen gezielt beeinflussen. Da nun nicht mehr die Anordnung der tatsächlichen Lichtquelle LQ in der Detektionsebene D erforderlich ist, resultieren eine Reihe von Freiheitsgraden bzgl. der Anordnung der Lichtquelle LQ in der Abtasteinheit.

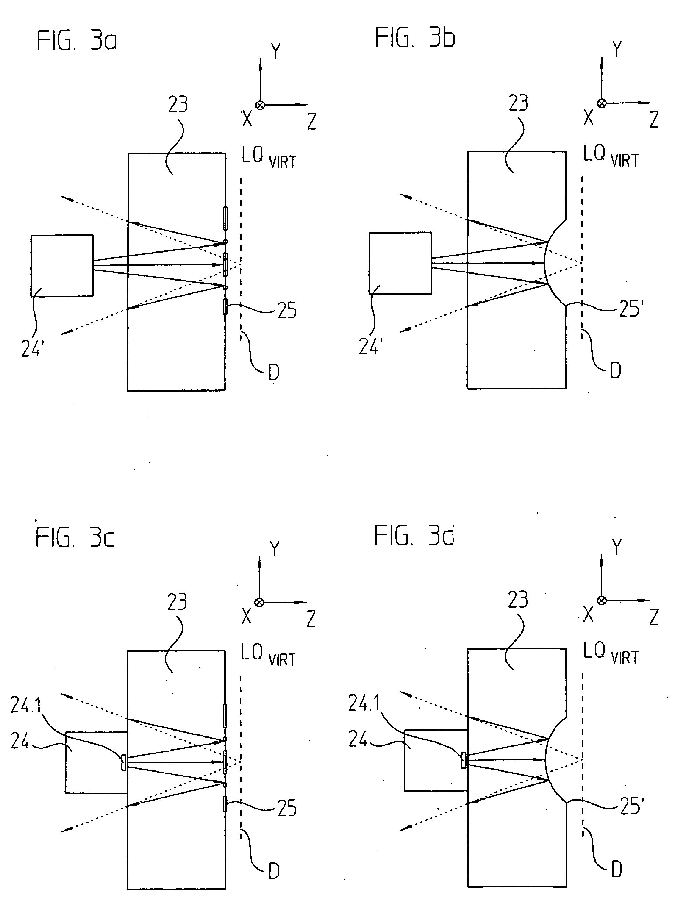

Einige Möglichkeiten zur Ausgestaltung des Reflektorelements in Verbindung mit der jeweiligen Lichtquelle seien nachfolgend anhand der Figuren 3a - 3d erläutert. Diese zeigen jeweils in stark schematisierter Form verschiedene Varianten zur Anordnung und/oder Ausgestaltung des Reflektorelements und der Lichtquelle in der Abtasteinheit.

Figur 3a zeigt hierbei eine Variante, bei der gegenüber der Lichtquelle 24' auf der zweiten Seite des Trägersubstrats 23 das Reflektorelement 25 integriert in diese Seite ausgebildet ist. Das Reflektorelement 25 wird hierbei in diesem Beispiel durch eine diffraktive Gitterstruktur gebildet. Bei einer derartigen Gitterstruktur kann es sich etwa um mehrstufige Phasengitter mit einer Blaze-Struktur oder aber um ideale Blaze-Gitterstrukturen handeln. Strichliniert in Figur 3a eingezeichnet, ist ferner die Lage der virtuellen Lichtquelle in der Ebene LQ$_{VIRT}$, die mit der Detektorebene D wunschgemäß zusammenfällt.

Eine zweite, alternative Ausführungsform eines geeigneten Reflektorelements ist in Figur 3b dargestellt. Erläutert werden nachfolgend nur noch die Unterschiede zu den bisherigen Beispielen; ansonsten werden für funktionsgleiche Elemente die identischen Bezugszeichen wie bislang verwendet.

In Figur 3b ist das Reflektorelement 25' auf der zweiten Seite des Trägersubstrats 23, gegenüberliegend zur Lichtquelle 24', nunmehr als refraktives optisches Element mit der gewünschten optischen Wirkung ausgebildet. Beispielsweise kann hierzu an dieser Stelle des Trägersubstrats 23 durch eine geeignete Beschichtung ein Spiegel ausgebildet werden, der eine entsprechende optische Reflexionswirkung auf die darauf einfallenden Strahlenbündel besitzt. In der Regel wird die entsprechende Reflektorkontur an dieser Stelle asphärisch ausgebildet sein.

In den beiden Beispielen der Figuren 3a und 3b ist - im Unterschied zum vorherigen Beispiel - die Lichtquelle 24' jeweils beabstandet zum Trägersubstrat 23 angeordnet.

Weitere Varianten sind in den Figuren 3c und 3d gezeigt. Diese Beispiele unterscheiden sich bzgl. der beiden vorherigen Varianten lediglich in der räumlichen Anordnung der Lichtquelle 24 und deren elektrischer Kontaktierung. So ist die Lichtquelle 24 nunmehr jeweils direkt auf dem Trägersubstrat 23 angeordnet und wird über die schematisch angedeuteten Kontaktierungselemente 24.1 elektrisch leitend kontaktiert. In Figur 3c ist das Reflektorelement 25 auf der Unterseite des Trägersubstrats 23 wiederum als diffraktive Gitterstruktur ausgebildet, in Figur 3d ist das Reflektorelement 25' als refraktives optisches Element mit der gewünschten optischen Wirkung ausgebildet.

In den beiden Beispielen der Figuren 3c und 3d übernimmt das Trägersubstrat 23 neben seiner optischen Funktion demzufolge jeweils noch die Positionierung und Kontaktierung der Lichtquelle 24. Im Fall einer dann möglichen Flip-Chip-Kontaktierung der Lichtquelle 24 entfallen sowohl aufwändige Justagearbeiten bei der Montage als auch die Notwendigkeit für ein separates Lichtquellen-Trägersubstrat.

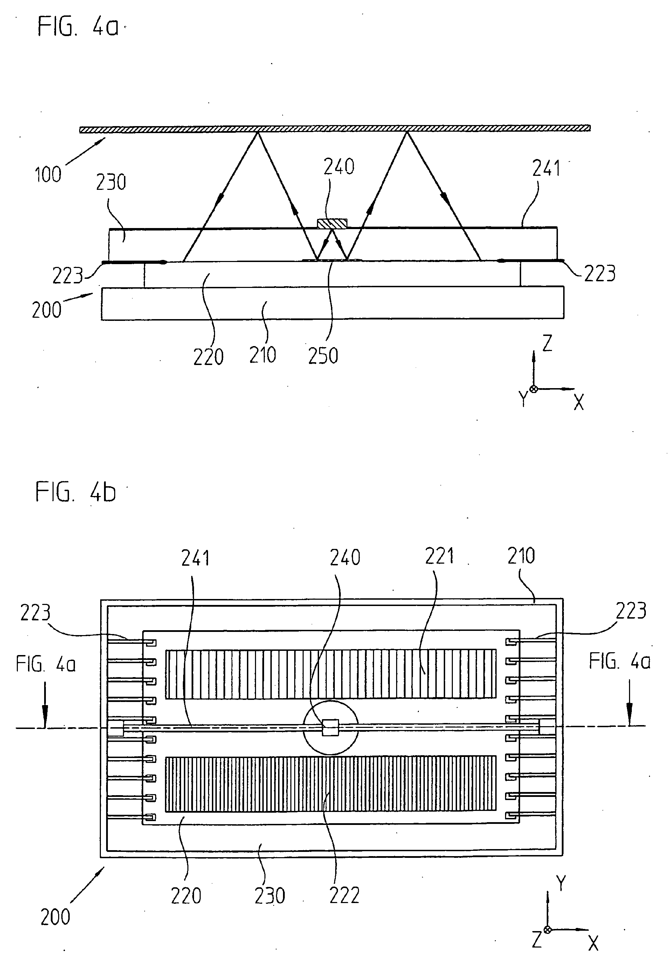

Eine weitere alternative Ausführungsform der ersten Variante der erfindungsgemäßen Positionsmesseinrichtung sei nachfolgend anhand der Figuren 4a und 4b erläutert. Diese zeigen analog zur Darstellung in den Figuren 1a und 1b wiederum eine stark schematisierte Schnittdarstellung zum Abtaststrahlengang sowie eine Draufsicht auf die Abtasteinheit 200. Erläutert seien nachfolgend nur die maßgeblichen Unterschiede zum Beispiel aus den Figuren 1 a und 1 b.

Analog zum obigen Beispiel ist auf Seiten der Abtasteinheit 200 eine Trägerplatine 210 vorgesehen, auf der die Detektoreinheit 220 mit den beiden Detektoranordnungen 221, 222 platziert ist. Im Unterschied zu oben ist das darüber angeordnete transparente Trägersubstrat 230 nunmehr jedoch deutlich großflächiger ausgebildet und überdeckt die Detektoranordnungen 221, 222 bzw. die Detektoreinheit 220 weitgehend. Dadurch ist ein verbesserter Schutz der Detektoreinheit 220 vor mechanischer Beschädigung gewährleistet.

Unterschiedlich zum obigen Beispiel erfolgt in der vorliegenden Ausführungsform zudem die elektrische Kontaktierung insbesondere der Detektoranordnungen 221, 222. Hierbei wird das Trägersubstrat 230 auch zur elektrischen Kontaktierung derselben genutzt. Zur Kontaktierung der Lichtquelle 240 verläuft ähnlich zum ersten Beispiel eine entsprechende Kontaktierungs-Leiterbahn 241 auf der Oberseite des Trägersubstrats 230 und endet im Randbereich desselben in Kontaktpads. Die elektrische Kontaktierung der Detektoranordnungen 221, 222 bzw. der Detektoreinheit erfolgt im Unterschied zum ersten Beispiel hingegen über weitere Kontaktierungs-Leiterbahnen 223 auf der Unterseite des Trägersubstrats 230 zwischen dem Trägersubstrat 230 und der Detektoreinheit 220. Zur Kontaktierung der Detektoranordnungen 221, 222 werden im Unterschied zum obigen Beispiel demzufolge keine Bonddrähte verwendet, sondern planar angeordnete Kontaktierungs-Leiterbahnen 241, 223 auf der Unterseite des Trägersubstrats 230. Dies gestattet den Einsatz bekannter Flip-Chip-Kontaktierungsverfahren bei der Fertigung dieser Baueinheit.

Ansonsten ist der grundsätzliche optische Aufbau identisch zum obigen Beispiel. Insbesondere die optische Funktionalität des Reflektorelements 250 auf der zweiten Seite bzw. Unterseite des Trägersubstrats 230 entspricht derjenigen aus Figur 1 a und 1 b.

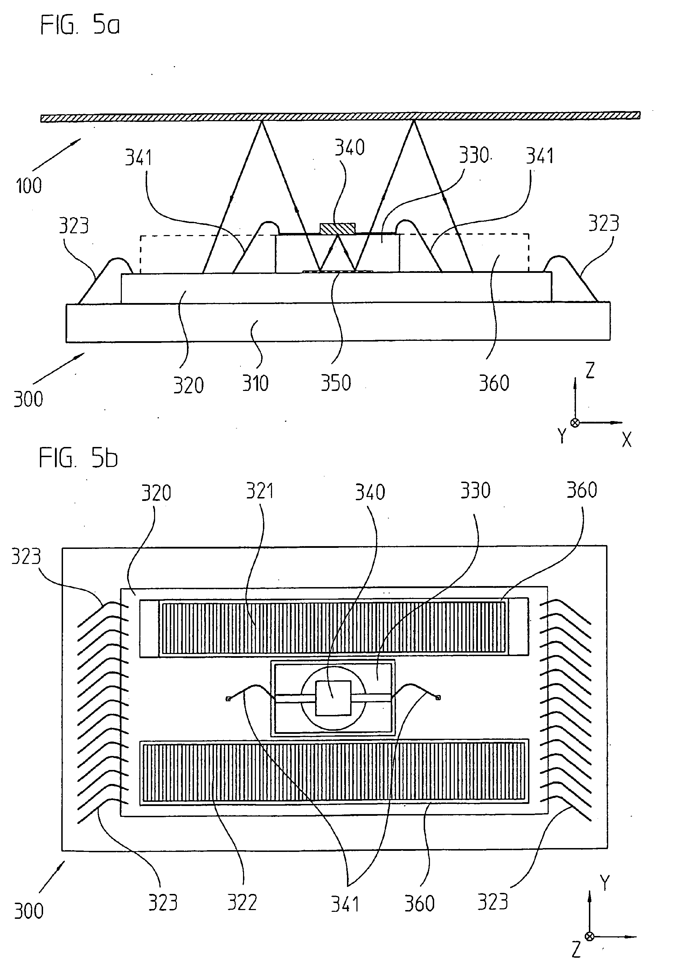

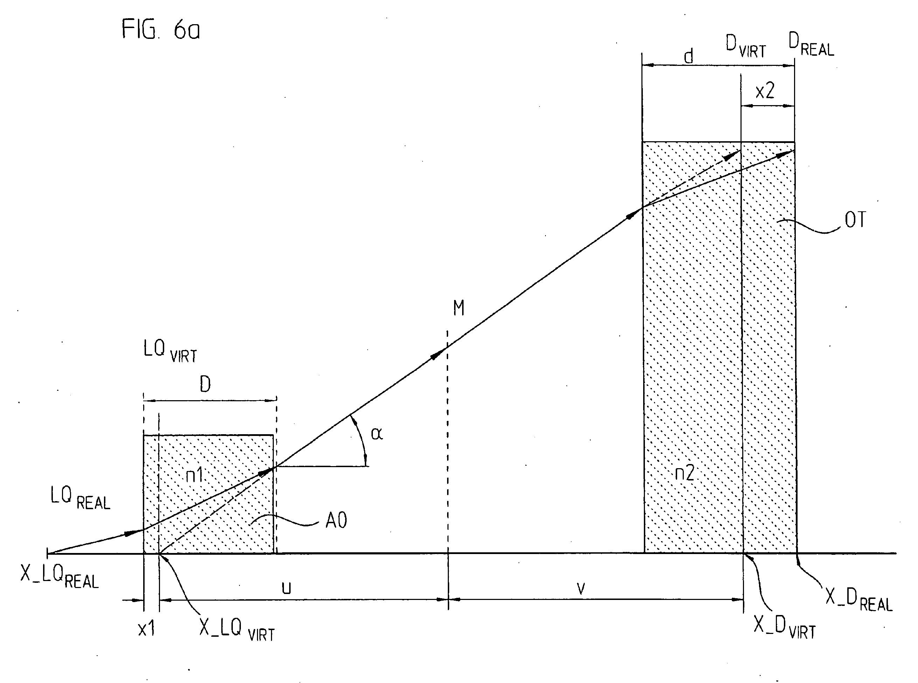

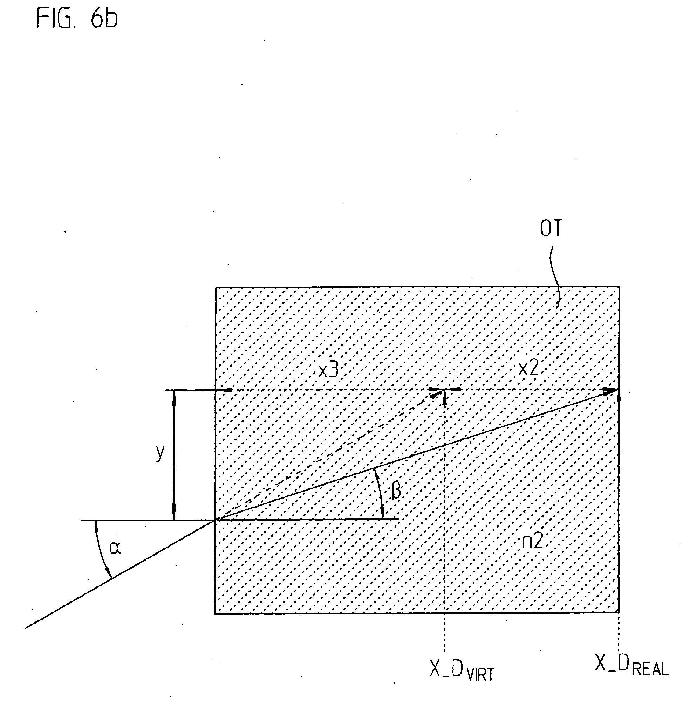

Anhand der Figuren 5a, 5b sowie 6 sei nachfolgend eine zweite Variante der erfindungsgemäßen Positionsmesseinrichtung erläutert. Hierbei zeigen die Figuren 5a und 5b wiederum eine Schnittansicht zur Erläuterung des Abtaststrahlengangs sowie eine Draufsicht auf die verwendete Abtasteinheit; anhand der Figuren 6a und 6b seien bestimmte geometrische Gegebenheiten dieser zweite Variante erläutert.

Über das anhand der ersten Variante erläuterte Vorsehen eines Reflektorelements im Abtaststrahlengang lässt sich der Ort der Lichtquelle virtuell in die Detektionsebene verlagern. Die gewünschte Unabhängigkeit insbesondere der Inkrementalabtastung vom Abtastabstand ist damit gewährleistet. Es existieren nunmehr jedoch Konstellationen mit bestimmten vorgegebenen geometrischen Randbedingungen, in denen trotz des Einsatzes eines Reflektorelements der virtuelle Leuchtpunkt der Lichtquelle nicht in der Detektionsebene zu liegen kommt, sondern vor der Detektionsebene liegt. Die nachfolgend erläuterte zweite Variante der erfindungsgemäßen Positionsmesseinrichtung bietet eine Lösung auf der Detektionsseite, um durch gezielte optische Maßnahmen im Abtaststrahlengang sicherzustellen, dass der virtuelle Leuchtpunkt der Lichtquelle bzw. die virtuelle Lichtquelle in der Detektionsebene zu liegen kommt.

Eine zur Lösung dieser Problematik geeignete Positionsmesseinrichtung ist in den Figuren 5a und 5b wiederum stark schematisiert dargestellt. Die zweite Variante der erfindungsgemäßen Positionsmesseinrichtung basiert auf der dargestellten Variante in den Figuren 1 a und 1 b. Nachfolgend seien lediglich die zusätzlich zur ersten Variante vorgesehenen Maßnahmen erläutert.

So ist zur Gewährleistung der Lage des virtuellen Lichtquellen-Leuchtpunkts in der Detektionsebene vorgesehen, oberhalb der Detektoranordnungen 321, 322 optische Transmissionselemente 360 anzuordnen. Die Transmissionselemente 360 sind als planparallele Glasplatten mit bestimmten optischen Eigenschaften (Dicke d, Brechungsindex n) ausgebildet und überdecken im Beispiel die jeweiligen Detektoranordnungen 321, 322 vollständig.

Der weitere Aufbau der Abtasteinheit 300 sowie der Reflexions-Maßverkörperung 100 entspricht demjenigen aus den Figuren 1 a und 1 b.

In der vorliegenden zweiten Variante der erfindungemäßen Positionsmesseinrichtung werden demzufolge zusätzlich zum Vorsehen des Reflektorelements 350 an der Unterseite des Trägersubstrats 330 noch mindestens auf der Detektoranordnung 321 zur Erzeugung der Inkrementalsignale optische Transmissionselemente 360 angeordnet, um die gewünschte Lage des virtuellen Lichtquelle in der Detektionsebene sicherzustellen. Es sei an dieser Stelle darauf hingewiesen, dass diese zusätzlichen Maßnahmen grundsätzlich auch ohne die erstgenannten Maßnahmen im Zusammenhang mit dem Reflektorelement zum Einsatz kommen können. Das heißt, es kann bei bestimmten geometrischen Randbedingungen ausreichen, nur diese Maßnahmen zu ergreifen und auf die Anordnung des Reflektorelements gemäß der ersten Variante zu verzichten. In diesem Fall wären dann nur geeignet gewählt optische Transmissionselemente im Abtaststrahlengang anzuordnen, etwa in Form planparalleler Glasplatten oberhalb der Detektoranordnungen.

Zur näheren Erläuterung der zweiten Variante und der durch die Transmissionselemente zusätzlich resultierenden optischen Wirkungen auf den Abtaststrahlengang sei auf die Figuren 6a und 6b verwiesen. Figur 6a zeigt wiederum in schematisierter Form den aufgefalteten Abtaststrahlengang inclusive verschiedener relevanter geometrischer Größen; Figur 6b stellt einen Ausschnitt aus Figur 6a dar.

Grundsätzlich können Probleme bei derartigen Abtastkonfigurationen resultieren, die Lösungen gemäß der zweiten Variante erfordern, wenn ein ungünstiges Verhältnis zwischen ausgeleuchteter Fläche der Detektoranordnung (große Strahlaufweitung) und Abtastabstand vorliegt. So kann es hierbei dazu kommen, dass der virtuelle Leuchtpunkt der Lichtquelle nicht wie gewünscht in der Detektionsebene zu liegen kommt, sondern vor der Detektionsebene.

Anhand der Figuren 6a und 6b soll diese Problematik sowie die zur Lösung derselben ergriffenen Maßnahmen gemäß der zweiten Variante der erfindungsgemäßen Positionsmesseinrichtung näher erläutert werden.

Das von der realen (Punkt-)Lichtquelle am Ort $x\_LQ_{REAL}$ in der Ebene $LQ_{REAL}$ emittierte Strahlenbündel wird zunächst über eine Aufweitungsoptik AO geeignet aufgeweitet. Die Aufweitungsoptik AO ist in der Regel als optisches Transmissionselement, z.B. als Linse, ausgebildet und besitzt eine Dicke D sowie einen Brechungsindex n1. Der dargestellte Lichtstrahl des emittierten Strahlenbündels erfährt an den Grenzflächen der Aufweitungsoptik AO beim Ein- und Austritt jeweils die gewünschte optische Wirkung in Form einer Brechung und verlässt die Aufweitungsoptik AO (strahl-aufgeweitet) wie in Figur 6a dargestellt unter dem Winkel $\alpha$. Die Lage x_LQ$_{VIRT}$ des virtuellen Leuchtpunkts ergibt sich wie durch die strichlinierte, rückwärtige Verlängerung des transmittierten Ausgangs-Lichtstrahls veranschaulicht als in der Aufweitungsoptik AO liegend in der Ebene LQ$_{VIRT}$; diese Ebene liegt um den Betrag x1 versetzt gegenüber der Eintritts-Grenzfläche im Inneren der Aufweitungsoptik AO.

Der Abstand u stellt wiederum den Abstand zwischen der Maßverkörperungsebene M und der virtuellen Lichtquellenebene LQ$_{VIRT}$ dar. Von Seiten der Maßverkörperung aus erscheint der virtuelle Leuchtpunkt demzufolge unter dem Winkel $\alpha$.

Wie bereits oben mehrfach erwähnt wird angestrebt, dass die Größen u und v identisch sind, d.h. u = v. In Worten ausgedrückt bedeutet dies, dass der Abstand zwischen der virtuellen Lichtquellenebene LQ$_{VIRT}$ und der Maßverkörperungsebene M identisch zum Abstand zwischen der Maßverkörperungsebene M und der Detektionsebene gewählt wird.

Da die vorliegende Positionsmesseinrichtung als Auflicht-System ausgebildet sein soll, hat die Forderung u = v zur Folge, dass die Detektionsebene demzufolge quasi innerhalb der Aufweitungsoptik AO zu liegen kommen würde. Dort kann eine reale Detektoranordnung jedoch nicht platziert werden.

Zur Lösung dieser Problematik wird daher in der zweiten Variante der erfindungsgemäßen Positionsmesseinrichtung vorgesehen, die Detektionsebene virtuell in die gewünschte Position, d.h. in die virtuelle Detektionsebene D$_{VIRT}$ zu bringen; real erfolgt die Platzierung der Detektoranordnung natürlich in einer geeigneten realen Detektionsebene D$_{REAL}$. Die virtuelle Detektionsebene D$_{VIRT}$ ist wie in Figur 6a veranschaulicht um die Distanz x2 von der realen Detektionsebene D$_{REAL}$ entfernt angeordnet. Um die virtuelle Detektionsebene D$_{VIRT}$ in die erforderliche Position zu bringen, wird im Abtaststrahlengang nunmehr ein optisches Transmissionselement OT mit der Dicke d und dem Brechungsindex n2 angeordnet, so dass darüber eine definierte optische Wirkung auf den Abtaststrahlengang resultiert.

In Figur 6b ist die optische Wirkung des Transmissionselements OT in einer vergrößerten Darstellung veranschaulicht, insbesondere die dadurch resultierenden Ablenkwirkungen für die transmittierten Strahlenbündel.

Nachfolgend sei die optische Wirkung des Transmissionselements OT sowie Überlegungen zur Ausgestaltung desselbigen anhand der Figuren 6a und 6b detailliert erläutert. Angestrebt wird hierbei, dass die virtuelle Detektionsebene D$_{VIRT}$ in die ebenfalls virtuelle Lichtquellenebene L$_{VIRT}$ gebracht wird. Die virtuelle Lichtquellenebene L$_{VIRT}$ befindet sich um die Distanz x1 von der Oberfläche der Aufweitungsoptik entfernt. Daraus ergibt sich die Forderung, dass x2 > x1 gewählt werden muss, wenn eine reale Platzierung der Detektoranordnung außerhalb der Aufweitungsoptik AO bzw. des Transmissionselements OT erfolgen soll.

Wie aus Figur 6b ersichtlich, unterscheiden sich der reale Strahlengang bis zu einer Detektoranordnung außerhalb des Transmissionselements OT und der (strichlinierte) Strahlengang bis zu einer virtuellen Detektoranordnung an der Position x_D$_{VIRT}$ i.w. durch die Berücksichtigung der an der Eintritts-grenzfläche resultierenden Brechung im Fall des realen Strahlengangs; im Fall des virtuellen Strahlengangs wird diese wie dargestellt nicht berücksichtigt.

Grundsätzlich gilt für den realen Strahlengang an der Eintritts-Grenzfläche:

$$\sin\alpha = n2 * \sin\beta, \qquad \text{(Gl. 3.1)}$$

Ferner gelten die nachfolgenden geometrischen Zusammenhänge für die dargestellte Situation in Figur 6b:

$$\tan\alpha = y \, / \, x3, \qquad \text{(Gl. 3.2)}$$

$$\tan\beta = y \, / \, (x3 + x2) \qquad \text{(Gl. 3.3)}$$

Daraus ergibt sich:

$$x3 = x2 * \tan\beta \, / \, (\tan\alpha - \tan\beta) \qquad \text{(Gl. 3.4)}$$

Unter Berücksichtigung der oben erwähnten Forderung x2 > x1 resultiert somit als Minimalbedingung für die Wahl der Größe d, d.h. der Dicke des Transmissionselements OT somit:

$$d = x2 + x3 =$$
$$= x1 * (1 + \tan\beta / (\tan\alpha - \tan\beta)) \qquad (Gl. 3.5)$$

Durch eine entsprechende Wahl der Dicke d des Transmissionselements OT im Abtaststrahlengang lässt sich somit die Position der virtuellen Detektionsebene wie gewünscht einstellen, um die angestrebten Vorteile bei der Abtastung sicherzustellen.

Wie aus den Figuren 5a und 5b ersichtlich ist, werden entsprechend ausgelegte optische Transmissionselemente mit geeigneten Dicken d als planparallele Glasplatten ausgebildet, die oberhalb der (realen) Detektoranordnungen angeordnet werden.

Die optischen Transmissionselemente können in dieser Variante der erfindungsgemäßen Positionsmesseinrichtung darüber hinaus auch noch mit weiteren optisch wirksamen Strukturen versehen werden, wie etwa mit Gitterstrukturen oder Linsenstrukturen, um eventuell resultierende Abbildungsfehler zu korrigieren. Ferner lässt sich über derartige Elemente sicherstellen, dass Licht nur senkrecht auf die Detektoranordnung einfällt und damit ein unerwünschtes Übersprechen zwischen benachbarten Detektorelementen infolge schrägen Lichteinfalls vermieden werden kann.

Neben den bislang erläuterten Varianten und Ausführungsbeispielen gibt es im Rahmen der vorliegenden Erfindung selbstverständlich noch weitere alternative und ergänzende Ausgestaltungsmöglichkeiten.

So ist es etwa möglich, die jeweils auf der Oberseite des Trägersubstrats platzierte Lichtquelle komplett mit einer geeigneten Vergussmasse zu umgeben und dadurch die Lichtquelle vor einer eventuellen Beschädigung im Betrieb zuverlässig zu schützen.

An der Ober- und Unterseite des Trägersubstrats können neben dem Reflektorelement weitere optische wirksame Teilbereiche ausgebildet werden, um im Bedarfsfall den Abtaststrahlengang zu beeinflussen. Hierbei kann es sich um weitere diffraktive Strukturen bzw. Gitter oder aber um weitere refraktive Strukturen respektive Reflektoren handeln. Vorzugsweise werden diese allesamt nur auf einer Seite, etwa der Unterseite, des Trägersubstrats angeordnet bzw. ausgebildet.

Wenn gemäß dem Ausführungsbeispiel in den Figuren 4a und 4b das Trägersubstrat mit der Detektoreinheit über eine Flip-Chip-Kontaktierung elektrisch verbunden wird, so kann im Zwischenraum ein geeignetes Füllmaterial bzw. ein sog. Underfiller angeordnet werden, der die auf der Unterseite ausgebildeten optisch wirksamen Strukturen im Trägersubstrat schützt etc..

## Patentansprüche

1. Positionsmesseinrichtung zur Erfassung der Relativposition einer Abtasteinheit (20; 200) sowie einer hierzu in mindestens einer Messrichtung (x) beweglichen Reflexions-Maßverkörperung (10; 100), wobei die Abtasteinheit (20; 200) eine Lichtquelle (24; 240) sowie eine Detektoranordnung (22.1, 22.2; 221, 222) in einer Detektionsebene (D) umfasst,
**dadurch gekennzeichnet,**
**dass** in der Abtasteinheit (20; 200) ferner mindestens ein Reflektorelement (25; 25'; 250; RE) im Abtaststrahlengang angeordnet ist, welches eine optische Wirkung auf den Abtaststrahlengang dahingehend besitzt, dass der Abstand (u) zwischen einer virtuellen Lichtquelle und der Reflexions-Maßverkörperung (10; 100) einerseits und der Abstand (v) zwischen der Reflexions-Maßverkörperung (10; 100) und der Detektionsebene (D) andererseits identisch ist, wodurch die Lichtquelle (24; 240) virtuell in der Detektionsebene (D) platziert ist.

2. Positionsmesseinrichtung nach Anspruch 1, **dadurch gekennzeichnet, dass** das Reflektorelement (25; 25'; 250; RE) zwischen der Lichtquelle (24; 240) und der Reflexions-Maßverkörperung (10; 100) im Abtaststrahlengang angeordnet ist.

3. Positionsmesseinrichtung nach Anspruch 1, **dadurch gekennzeichnet, dass** das Reflektorelement (25; 25'; 250; RE) als refraktives optisches Element ausgebildet ist.

4. Positionsmesseinrichtung nach Anspruch 1, **dadurch gekennzeichnet, dass** das Reflektorelement (25; 25'; 250; RE) als diffraktives optisches Element ausgebildet ist.

5. Positionsmesseinrichtung nach mindestens einem der vorangehenden Ansprüche, **dadurch gekennzeichnet, dass** die Abtasteinheit (20; 200) ein transparentes Trägersubstrat (23; 230) umfasst,

- auf dessen zur Reflexions-Maßverkörperung (10; 100) zugewandten ersten Seite (Oberseite) die Lichtquelle (24; 240) angeordnet ist und
- auf dessen von der Reflexions-Maßverkörperung (10; 100) abgewandten zweiten Seite (Unterseite) das Reflektorelement (25; 25'; 250; RE) angeordnet ist.

6. Positionsmesseinrichtung nach Anspruch 5, **dadurch gekennzeichnet, dass** die strahlungsemittierende Fläche der Lichtquelle (24; 24') in Richtung der ersten Seite des Trägersubstrats (23; 230) angeordnet ist und die Lichtquelle (24; 240) Strahlung in Richtung der zweiten Seite des Trägersubstrats (23; 230) emittiert.

7. Positionsmesseinrichtung nach Anspruch 5, **dadurch gekennzeichnet, dass** das das Reflektorelement (25; 25'; 250; RE) als in die zweite Seite des Trägersubstrat (23; 230) integriertes optisches Bauelement ausgebildet ist.

8. Positionsmesseinrichtung nach Anspruch 5, **dadurch gekennzeichnet, dass** das Trägersubstrat (23; 230) mit der Lichtquelle (24; 240) und dem Reflektorelement (25; 25'; 250; RE) über einer Detektoreinheit (22; 220) mit mindestens einer Detektoranordnung (22.1, 22.2; 221, 222) angeordnet ist, wobei die Detektoreinheit (22; 220) auf einer Trägerplatine (21; 210) in der Abtasteinheit (20; 200) platziert ist.

9. Positionsmesseinrichtung nach Anspruch 8, **dadurch gekennzeichnet, dass** das Trägersubstrat (23) eine kleinere Fläche als die Detektoreinheit (22) einnimmt und in einem zentralen Teilbereich der Detektoreinheit (22) angeordnet ist, ohne dass die Detektoranordnungen (22.1, 22.2) vollständig überdeckt sind, so dass die Detektoreinheit (22) in nicht vom Trägersubstrat (23) abgedeckten Bereichen über Bonddrähte (22.3) mit Leiterbahnen in der Trägerplatine (21) elektrisch leitend verbunden ist.

10. Positionsmesseinrichtung nach Anspruch 9, **dadurch gekennzeichnet, dass** die Lichtquelle (24) auf dem Trägersubstrat (23) über Bonddrähte (24.1) mit Leiterbahnen in der Detektoreinheit (22) elektrisch leitend verbunden ist.

11. Positionsmesseinrichtung nach Anspruch 8, **dadurch gekennzeichnet, dass** das Trägersubstrat (230) die mindestens eine Detektoranordnung (221; 222) auf der Detektoreinheit (220) teilweise überdeckt, wobei zur elektrischen Kontaktierung der Detektoranordnung (221, 222) Kontaktierungs-Leiterbahnen (223) zwischen der zweiten Seite des Trägersubstrats (230) und der Detektoranordnung (221, 222) angeordnet sind.

12. Positionsmesseinrichtung nach Anspruch 11, **dadurch gekennzeichnet, dass** die Lichtquelle (240) auf dem Trägersubstrat (230) über Kontaktierungs-Leiterbahnen auf dem Trägersubstrat (230) mit Leiterbahnen in der Detektoreinheit (220) elektrisch leitend verbunden ist.

13. Positionsmesseinrichtung zur Erfassung der Relativposition einer Abtasteinheit (300) sowie einer hierzu in mindestens einer Messrichtung (x) beweglichen Reflexions-Maßverkörperung (100), wobei die Abtasteinheit (300) eine Lichtquelle (340) sowie eine Detektoranordnung (221, 222) in einer Detektionsebene umfasst,
**dadurch gekennzeichnet,**
**dass** in der Abtasteinheit (300) ferner mindestens ein optisches Transmissions-Element (360) im Abtaststrahlengang angeordnet ist, welches eine optische Wirkung auf den Abtaststrahlengang dahingehend besitzt, dass der Abstand (u) zwischen der Lichtquelle (340) und der Reflexions-Maßverkörperung (100) einerseits und der Abstand (v) zwischen der Reflexions-Maßverkörperung (100) und einer Detektoranordnung (321, 322) in einer virtuellen Detektionsebene ($D_{VIRT}$) andererseits identisch ist, so dass im Fall der Relativbewegung von Abtasteinheit (300) und Reflexions-Maßverkörperung (100) ein verschiebungsabhängig moduliertes Streifenmuster in der virtuellen Detektionsebene ($D_{VIRT}$) resultiert.

14. Positionsmesseinrichtung nach Anspruch 13, **dadurch gekennzeichnet, dass** das optische Transmissionselement (360) zwischen der Reflexions-Maßverkörperung (100) und der Detektoranordnung (321, 322) im Abtaststrahlengang angeordnet ist.

15. Positionsmesseinrichtung nach Anspruch 13, **dadurch gekennzeichnet, dass** das optische Transmissionselement (360) als refraktives optisches Element ausgebildet ist.

16. Positionsmesseinrichtung nach Anspruch 15, **dadurch gekennzeichnet, dass** das optische Transmissionselement (360) als planparallele Glasplatte mit einer definierten Dicke (d) ausgebildet ist.

**17.** Positionsmesseinrichtung nach mindestens einem Ansprüche 13 - 16, **dadurch gekennzeichnet, dass** die Abtasteinheit (300) eine Trägerplatine (310) umfasst, auf der eine Detektoreinheit (320) mit mindestens einer Detektoranordnung (321, 322) angeordnet ist, wobei über der Detektoranordnung (321, 322) das optische Transmissionselement (360) angeordnet ist.

**18.** Positionsmesseinrichtung nach mindestens einem der Ansprüche 13 - 17, **dadurch gekennzeichnet, dass** das optische Transmissionselement mit optischen Elementen versehen ist, die sicherstellen, dass Licht nur senkrecht auf die Detektoranordnung einfällt.

**19.** Positionsmesseinrichtung nach mindestens einem der vorhergehenden Ansprüche, **dadurch gekennzeichnet, dass** die Lichtquelle (24, 240, 340) als Punktlichtquelle ausgebildet ist.

**20.** Positionsmesseinrichtung nach mindestens einem der vorhergehenden Ansprüche, **dadurch gekennzeichnet, dass** die Abtasteinheit (20, 200, 300) mindestens zwei Detektoranordnungen (22.1, 22.2, 221, 222, 321, 322) umfasst, von denen eine erste Detektoranordnung (22.1, 221, 321) zur Detektion eines verschiebungsabhängigen Inkrementalsignals geeignet ist und eine zweite Detektoranordnung (22.2, 222, 322) zur Detektion eines Absolutpositionssignals geeignet ist.

**21.** Positionsmesseinrichtung nach mindestens einem der vorhergehenden Ansprüche, **dadurch gekennzeichnet, dass** die Detektoranordnung (22.1, 22.2, 221, 222, 321, 322) als Detektorarray ausgebildet ist, das aus einzelnen Detektorelementen besteht, die in Messrichtung (x) benachbart zueinander angeordnet sind.

**Claims**

**1.** Position measuring device for acquiring the relative position of a scanning unit (20; 200) and of a reflection material measure (10; 100) which can move in at least one measuring direction (x), the scanning unit (20; 200) comprising a light source (24; 240) and a detector arrangement (22.1, 22.2; 221, 222) in a detection plane (D),
**characterized**
**in that** there is further arranged in the scanning beam path in the scanning unit (20; 200) at least one reflector element (25; 25'; 250; RE) which has an optical effect on the scanning beam path to the effect that, on the one hand, the distance (u) between a virtual light source and the reflection material measure (10; 100) and, on the other hand, the distance (v) between the reflection material measure (10; 100) and the detection plane (D) is identical, as a result of which the light source (24; 240) is placed virtually in the detection plane (D).

**2.** Position measuring device according to Claim 1, **characterized in that** the reflector element (25; 25'; 250; RE) is arranged in the scanning beam path between the light source (24; 240) and the reflection material measure (10; 100).

**3.** Position measuring device according to Claim 1, **characterized in that** the reflector element (25; 25'; 250; RE) is designed as a refractive optical element.

**4.** Position measuring device according to Claim 1, **characterized in that** the reflector element (25; 25'; 250; RE) is designed as a diffractive optical element.

**5.** Position measuring device according to at least one of the preceding claims, **characterized in that** the scanning unit (20; 200) comprises a transparent carrier substrate (23; 230),

- on whose first side (top side) facing the reflection material measure (10; 100) the light source (24; 240) is arranged, and
- on whose second side (underside) averted from the reflection material measure (10; 100) the reflector element (25; 25'; 250; RE) is arranged.

**6.** Position measuring device according to Claim 5, **characterized in that** the radiation-emitting surface of the light source (24; 240) is arranged in the direction of the first side of the carrier substrate (23; 230), and the light source (24; 240) emits radiation in the direction of the second side of the carrier substrate (23; 230).

7. Position measuring device according to Claim 5, **characterized in that** the reflector element (25; 25'; 250; RE) is designed as an optical component integrated in the second side of the carrier substrate (23; 230).

8. Position measuring device according to Claim 5, **characterized in that** the carrier substrate (23; 230) is arranged with the light source (24; 240) and the reflector element (25; 25'; 250; RE) over a detector unit (22; 220) having at least one detector arrangement (22.1, 22.2; 221, 222), the detector unit (22; 220) being placed on a carrier board (21; 210) in the scanning unit (20; 200).

9. Position measuring device according to Claim 8, **characterized in that** the carrier substrate (23) occupies a smaller area than the detector unit (22) and is arranged in a central subregion of the detector unit (22), without the detector arrangements (22.1, 22.2) being completely covered over, so that in regions not covered up by the carrier substrate (23) the detector unit (22) is connected in an electrically conducting fashion to printed conductors in the carrier board (21) via bond wires (22.3).

10. Position measuring device according to Claim 9, **characterized in that** the light source (24) on the carrier substrate (23) is connected in an electrically conducting fashion to printed conductors in the detector unit (22) via bond wires (24.1).

11. Position measuring device according to Claim 8, **characterized in that** the carrier substrate (230) partially covers over the at least one detector arrangement (221; 222) on the detector unit (220), contact printed conductors (223) being arranged between the second side of the carrier substrate (230) and the detector arrangement (221, 222) in order to make electrical contact with the detector arrangement (221, 222).

12. Position measuring device according to Claim 11, **characterized in that** the light source (240) on the carrier substrate (230) is connected in an electrically conducting fashion to printed conductors in the detector unit (220) via contact printed conductors on the carrier substrate (230).

13. Position measuring device for acquiring the relative position of a scanning unit (300) and of a reflection material measure (100) which can move in at least one measuring direction (x), the scanning unit (300) comprising a light source (340) and a detector arrangement (221, 222) in a detection plane, **characterized in that** there is further arranged in the scanning beam path in the scanning unit (300) at least one optical transmission element (360) which has an optical effect on the scanning beam path to the effect that, on the one hand, the distance (u) between the light source (340) and the reflection material measure (100) and, on the other hand, the distance (v) between the reflection material measure (100) and a detector arrangement (321, 322) in a virtual detection plane ($D_{VIRT}$) is identical, so that the result in the case of the relative movement of scanning unit (300) and reflection material measure (100) is a shift-dependently modulated fringe pattern in the virtual detection plane ($D_{VIRT}$).

14. Position measuring device according to Claim 13, **characterized in that** the optical transmission element (360) is arranged between the reflection material measure (100) and the detector arrangement (321, 322) in the scanning beam path.

15. Position measuring device according to Claim 13, **characterized in that** the optical transmission element (360) is designed as a refractive optical element.

16. Position measuring device according to Claim 15, **characterized in that** the optical transmission element (360) is designed as a plane-parallel glass plate of defined thickness (d).

17. Position measuring device according to at least one of Claims 13-16, **characterized in that** the scanning unit (300) comprises a carrier board (310) on which a detector unit (320) having at least one detector arrangement (321, 322) is arranged, the optical transmission element (360) being arranged over the detector arrangement (321, 322).

18. Position measuring device according to at least one of Claims 13-17, **characterized in that** the optical transmission element is provided with optical elements which ensure that light impinges only vertically on the detector arrangement.

19. Position measuring device according to at least one of the preceding claims, **characterized in that** the light source (24, 240, 340) is designed as a point light source.

20. Position measuring device according to at least one of the preceding claims, **characterized in that** the scanning unit (20, 200, 300) comprises at least two detector arrangements (22.1, 22.2, 221, 222, 321, 322) of which a first detector arrangement (22.1, 221, 321) is suitable for detecting a shift-dependent incremental signal, and a second detector arrangement (22.2, 222, 322) is suitable for detecting an absolute-position signal.

21. Position measuring device according to at least one of the preceding claims, **characterized in that** the detector arrangement (22.1, 22.2, 221, 222, 321, 322) is designed as a detector array composed of individual detector elements which are arranged adjacent to one another in the measuring direction (x).

**Revendications**

1. Dispositif de mesure de position pour détecter la position relative d'une unité de palpage (20 ; 200) ainsi que d'un étalon de réflexion (10 ; 100) mobile à cet effet dans au moins un sens de mesure (x), l'unité de palpage (20 ; 200) comprenant une source de lumière (24 ; 240) ainsi qu'un arrangement de détecteurs (22.1, 22.2 ; 221, 222) dans un plan de détection (D),
   **caractérisé en ce**
   **que** dans l'unité de palpage (20 ; 200) est en outre disposé au moins un élément réflecteur (25 ; 25' ; 250 ; RE) dans le trajet du rayon de palpage, lequel possède un effet optique sur le trajet du rayon de palpage de sorte que l'écart (u) entre une source de lumière virtuelle et l'étalon de réflexion (10 ; 100) d'une part et l'écart (v) entre l'étalon de réflexion (10 ; 100) et le plan de détection (D) d'autre part sont identiques, ce qui a pour effet que la source de lumière (24 ; 240) est placée virtuellement dans le plan de détection (D).

2. Dispositif de mesure de position selon la revendication 1, **caractérisé en ce que** l'élément réflecteur (25 ; 25' ; 250 ; RE) est disposé dans le trajet du rayon de palpage entre la source de lumière (24 ; 240) et l'étalon de réflexion (10 ; 100).

3. Dispositif de mesure de position selon la revendication 1, **caractérisé en ce que** l'élément réflecteur (25 ; 25' ; 250 ; RE) est réalisé sous la forme d'un élément optique réfractif.

4. Dispositif de mesure de position selon la revendication 1, **caractérisé en ce que** l'élément réflecteur (25 ; 25' ; 250 ; RE) est réalisé sous la forme d'un élément optique diffractif.

5. Dispositif de mesure de position selon au moins l'une des revendications précédentes, **caractérisé en ce que** l'unité de palpage (20 ; 200) comprend un substrat porteur (23 ; 230) transparent,

   - sur le premier côté (côté supérieur) duquel, qui fait face à l'étalon de réflexion (10 ; 100), est disposée la source de lumière (24 ; 240) et
   - sur le deuxième côté (côté inférieur) duquel, qui est à l'opposé de l'étalon de réflexion (10 ; 100), est disposé l'élément réflecteur (25 ; 25' ; 250 ; RE).

6. Dispositif de mesure de position selon la revendication 5, **caractérisé en ce que** la surface émettrice de rayonnement de la source de lumière (24 ; 240) est disposée en direction du premier côté du substrat porteur (23 ; 230) et la source de lumière (24 ; 240) émet un rayonnement en direction du deuxième côté du substrat porteur (23 ; 230).

7. Dispositif de mesure de position selon la revendication 5, **caractérisé en ce que** l'élément réflecteur (25 ; 25' ; 250 ; RE) est réalisé sous la forme d'un composant optique intégré dans le deuxième côté du substrat porteur (23 ; 230).

8. Dispositif de mesure de position selon la revendication 5, **caractérisé en ce que** le substrat porteur (23 ; 230) muni de la source de lumière (24 ; 240) et de l'élément réflecteur (25 ; 25' ; 250 ; RE) est disposé au-dessus d'une unité de détection (22 ; 220) comprenant au moins un arrangement de détecteurs (22.1, 22.2 ; 221, 222), l'unité de détection (22 ; 220) étant placée sur une platine porteuse (21 ; 210) dans l'unité de palpage (20 ; 200).

9. Dispositif de mesure de position selon la revendication 8, **caractérisé en ce que** le substrat porteur (23) occupe une surface plus petite que l'unité de détection (22) et est disposé dans une zone partielle centrale de l'unité de détection (22) sans que les arrangements de détecteurs (22.1, 22.2) ne soient entièrement recouverts, de sorte que l'unité de détection (22), dans les zones non recouvertes par le substrat porteur (23), est reliée de manière électriquement conductrice par le biais de fils de liaison (22.3) avec des pistes conductrices dans la platine porteuse (21).

**10.** Dispositif de mesure de position selon la revendication 9, **caractérisé en ce que** la source de lumière (24) sur le substrat porteur (23) est reliée de manière électriquement conductrice par le biais de fils de liaison (24.1) avec des pistes conductrices dans l'unité de détection (22).

**11.** Dispositif de mesure de position selon la revendication 8, **caractérisé en ce que** le substrat porteur (230) recouvre partiellement l'au moins un arrangement de détecteurs (221, 222) sur l'unité de détection (220), des pistes conductrices de contact (223) étant disposées entre le deuxième côté du substrat porteur (230) et l'arrangement de détecteurs (221, 222) pour établir le contact électrique avec l'arrangement de détecteurs (221, 222).

**12.** Dispositif de mesure de position selon la revendication 11, **caractérisé en ce que** la source de lumière (240) sur le substrat porteur (230) est reliée de manière électriquement conductrice avec des pistes conductrices dans l'unité de détection (220) par le biais de pistes conductrices de contact sur le substrat porteur (230).

**13.** Dispositif de mesure de position pour détecter la position relative d'une unité de palpage (300) ainsi que d'un étalon de réflexion (100) mobile à cet effet dans au moins une direction de mesure (x), l'unité de palpage (300) comprenant une source de lumière (340) ainsi qu'un arrangement de détecteurs (221, 222) dans un plan de détection, **caractérisé en ce que** dans l'unité de palpage (300) est en outre disposé au moins un élément de transmission optique (360) dans le trajet du rayon de palpage, lequel possède un effet optique sur le trajet du rayon de palpage de sorte que l'écart (u) entre la source de lumière (340) et l'étalon de réflexion (100) d'une part et l'écart (v) entre l'étalon de réflexion (100) et un arrangement de détecteurs (321, 322) dans un plan de détection virtuel ($D_{VIRT}$) d'autre part sont identiques, de sorte qu'en cas de mouvement relatif de l'unité de palpage (300) et de l'étalon de réflexion (100), il en résulte dans le plan de détection virtuel ($D_{VIRT}$) un modèle de bande modulé en fonction du décalage.

**14.** Dispositif de mesure de position selon la revendication 13, **caractérisé en ce que** l'élément de transmission optique (360) est disposé dans le trajet du rayon de palpage entre l'étalon de réflexion (100) et l'arrangement de détecteurs (321, 322).

**15.** Dispositif de mesure de position selon la revendication 13, **caractérisé en ce que** l'élément de transmission optique (360) est réalisé sous la forme d'un élément optique réfractif.

**16.** Dispositif de mesure de position selon la revendication 15, **caractérisé en ce que** l'élément de transmission optique (360) est réalisé sous la forme d'une plaque en verre à faces parallèles ayant une épaisseur (d) définie.

**17.** Dispositif de mesure de position selon au moins l'une des revendications 13 à 16, **caractérisé en ce que** l'unité de palpage (300) comprend une platine porteuse (310) sur laquelle est disposée une unité de détection (320) comprenant au moins un arrangement de détecteurs (321, 322), l'élément de transmission optique (360) étant disposé au-dessus de l'arrangement de détecteurs (321, 322).

**18.** Dispositif de mesure de position selon au moins l'une des revendications 13 à 17, **caractérisé en ce que** l'élément de transmission optique est muni d'éléments optiques qui garantissent que la lumière n'est incidente que verticalement sur l'arrangement de détecteurs.

**19.** Dispositif de mesure de position selon au moins l'une des revendications précédentes, **caractérisé en ce que** la source de lumière (24, 240, 340) est réalisée sous la forme d'une source de lumière ponctuelle.

**20.** Dispositif de mesure de position selon au moins l'une des revendications précédentes, **caractérisé en ce que** l'unité de palpage (20, 200, 300) comprend au moins deux arrangements de détecteurs (22.1, 22.2, 221, 222, 321, 322), parmi lesquels un premier arrangement de détecteurs (22.1, 221, 321) est conçu pour la détection d'un signal incrémental dépendant du décalage et un deuxième arrangement de détecteurs (22.2, 222, 322) est conçu pour la détection d'un signal de position absolue.

**21.** Dispositif de mesure de position selon au moins l'une des revendications précédentes, **caractérisé en ce que** l'arrangement de détecteurs (22.1, 22.2, 221, 222, 321, 322) est réalisé sous la forme d'un réseau de détecteurs qui se compose d'éléments détecteurs individuels qui sont disposés les uns à côté des autres dans le sens de la mesure (x).

FIG. 1a

10

22.3

20

24

24.1

24.1

22.3

22

21

25

23

Z

Y

X

FIG. 1b

22

22.1

24

23

22.3

FIG. 1a

FIG. 1a

20

22.3

22.2

24.1

21

Y

Z

X

FIG. 2

FIG. 3a

FIG. 3b

FIG. 3c

FIG. 3d

FIG. 4a

100
230
240
223
200
241
223
220  210  250

Z
Y⊗ → X

FIG. 4b

241   240   221   210
223
FIG. 4a
FIG. 4a
223
200
220   230   222

Y
Z⊗ → X

FIG. 5a

FIG. 5b

FIG. 6a

EP 1 852 684 B1

FIG. 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005023450 A1

- US 20040155178 A1